# EUROPEAN PATENT SPECIFICATION

(11) **EP 1 342 558 B1**
(45) Date of publication and mention of the grant of the patent: **23.05.2007**
(21) Application number: 03251194.1
(22) Date of filing: 27.02.2003
(51) Int. Cl.: B29D 11/00, B29C 45/42, B29C 37/00, B29C 33/44

(54) **Rigid vacuum tip**
Starre Spitze für Vakuum
Embout rigide à vide

(30) Priority: 28.02.2002 US 84895
(43) Date of publication of application: 10.09.2003
(73) Proprietor: Johnson & Johnson Vision Care, Inc., Jacksonville, FL 32256 (US)
(72) Inventor: Parnell, Phillip King, Jacksonville, FL 32277 (US); Ansell, Scott Frederick, Jacksonville, FL 32218 (US); Litwin, Michael William, Jacksonville, FL 32221 (US); Berckmiller, Gregory L., Jacksonville, FL 32223 (US); Freeman, Timothy Patrick, Jacksonville, FL 32216 (US); Fox, Richard John, Jacksonville, FL 32223 (US)
(74) Representative: Mercer, Christopher Paul

(56) References cited:
- EP-A- 0 686 491
- EP-A- 1 029 789
- WO-A-01/74569
- WO-A-01/74574
- PATENT ABSTRACTS OF JAPAN vol. 2000, no. 26, 1 July 2002 (2002-07-01) & JP 2001 264706 A (NOVARTIS AG), 26 September 2001 (2001-09-26)

## Description

This application is a continuation-in-part of Parnell et al, US Serial No. 09/925,403, filed August 9, 2001, titled, "In-lay Station with Alignment Assemblies and Transfer Tubes", incorporated herein by reference.

### 1. Field of the Invention

The invention relates to a transfer tip useful in handling injection molded ophthalmic lens molds, and to a system and a process employing said transfer tip. The invention is particularly suited for use with high speed, vacuum and air pressure assisted robots that remove still-hot (hence deformable) soft contact lens mold halves from their injection molds, and transfer them to a production line pallet conveyor system for further processing. The transfer tip has a body portion of a substantially rigid material. In one embodiment, the transfer tip of the invention has a working end that has an outer surface that is complementary to the shape of the lens mold half being handled, this being either a convex or concave shape. In practice, this embodiment of the invention requires less applied vacuum and evacuation volume, for example, to achieve part pick up and transfer than designs known heretofore. This in turn permits faster or reduced cycling time with increased production and more judicious use of resources. In addition, a reduction in pressure needed to handle the hot lens molds, as obtained by the invention, also means the molds are exposed to less force. This means less deformation of the mold occurs. This reduction in deformation is further supplemented by the substantially rigid nature of the transfer tip, which rigidity forestalls deformation of the transfer tip itself under the forces applied.

### 2. Description of the Prior Art

Current manufacturing protocols for soft contact lenses call for the curing of an appropriate monomer mixture between front and back mold halves. The mold halves are typically formed by injection molding suitable plastic materials, such as polystyrene, into a molding machine comprised of two opposing elements which interface to form the mold halves. One element has an array of regularly spaced concave recesses whereas the opposing element has a corresponding array of convex protuberances. When mated, the concave recesses and convex protuberances define therebetween a shaped volume in which the lens mold halves are produced. In operation, the opposing elements come together and molten polymer (e.g. polystyrene) is injected into the shaped volumes between the surfaces of the opposing elements. The mold halves are held for a time sufficient to set their shapes. Once sufficiently set, the opposing elements separate and the mold halves are removed.

Generally, the Back Curve (BC) mold halves provide the convex optical mold surface which shapes the portion of the contact lens that contacts the eye. The Front Curve (FC) mold halves provide the concave surface that molds the front face of the contact lens. For purposes of maintaining optimal optical integrity, the molding machine that produces the Back Curve mold sections is designed so that upon separation, the non-optically relevant, concave surfaces of the mold halves are exposed, the convex surfaces remaining within the concave recesses. While the molding machine that produces the Front Curve mold sections is nearly identical in all functional respects to the Back Curve molding machine, it operates such that when its opposing elements separate, the Front Curve optically relevant mold sections remain in contact with the convex protuberances. A single molding machine can be used to make Back Curve and Front Curve mold sections simultaneously. Molding machines and robots for which this invention are useful are disclosed in Lust et al, "Mold and Molding System for Making Ophthalmic Devices", Serial No. 09/305,886 filed May 5, 1999; Parnell et al, "In-lay Station with Alignment Assemblies and Transfer Tubes", Serial No. 09/925,403 filed August 9, 2001; and US Patent 5,545,366, all of which are incorporated herein by reference.

In production lines, removal of the mold halves, be they Front or Back Curves, is ordinarily accomplished through the use of vacuum-assisted robots. Industrially, these robots typically employ, at the working end that contacts the mold halves, soft flexible materials, such as silicones and rubbers, in the form of variously shaped end effectors, suction cups, tips, pads and the like. By convention, soft flexible materials have been employed because, in a high speed production line, the mold halves are removed when their shape is set, not necessarily when they are cool. Because they are still relatively hot, soft flexible materials have been used in an effort to minimize damage to the lens molds, which in their heated state are still pliant and deformable. Damage to the lens molds in this regard can adversely affect, in turn, the contact lenses ultimately cast in said molds. To further forestall damage, it is common to provide a handling means, for example, a flange, somewhere on a non-critical portion of the lens mold, thus enabling the robotic transfer tip to contact only the flange or other handling means, hence leaving the optically sensitive area of the mold, where the contact lens is formed, untouched.

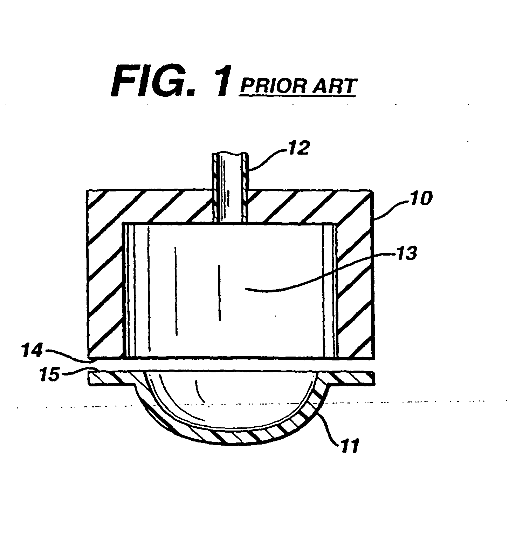

FIGURE 1 illustrates a prior art practice. FIGURE 1 is a side view showing transfer tip 10, made of a soft, flexible material such as silicone rubber, which tip is cylindrical in shape and open at the pickup end, defined by annular rim 14. As seen in FIGURE 1, the annular rim 14 of tip 10 contacts the injection molded lens mold 11 (depicted in FIGURE 1 as a Back Curve) at flange 15 which is provided for this purpose. Transfer tip 10 is connected via aperture 12 to a vacuum source which, when actuated, enables pickup of mold 11. Also as seen in FIGURE 1, the interior of cylindrical tip 10 has a volume 13. This must be sufficiently evacuated by the vacuum source for pickup to occur. In a typical design of this type, transfer tip 10 can be about 18mm in diameter and about 15mm high (dimensions are approximate). The applied vacuum typically necessary to effectuate pickup of mold 11 is thus about 0.8 bar (11 psi). The volume of gas 13 thus needed to be evacuated under these circumstances is approximately 3 ml. The amount of time it takes to evacuate this volume of gas affects the cycle time of the production line; that is, the time it takes a robotic transfer device to remove a lens mold half from a first location, e.g. from its injection molding machine, transfer it to a second location, e.g. a conveyor pallet, and return to the first location to repeat the process.

Although industrial useful, improvements to known practices, as for example described for and illustrated by FIGURE 1, are desirable. Among other advances sought is a reduction in applied forces, such as vacuum or positive gas pressure, inasmuch as the mold halves are removed from the molding machine at temperatures where the plastic is still pliant. Forces applied to the part at this time can distort the lens mold, leading to deformations in radius of curvature for the optically important surface on the order of 0.04 to 0.06mm (using e.g. the soft cylindrical tip of FIGURE 1), which can render the mold unacceptable for contact lens casting. Minimization of required forces for part pickup and/or deposit would therefore improve mold quality. Moreover, it has been found that the use of current soft, flexible materials actually abet twisting of the lens mold, which itself causes deformation.

EP 0 686 491 A2 discloses a transfer tip for handling an injection molded ophthalmic lens mold comprising a rigid body portion having a distal end and a proximal end, the body portion having sealing means peripheral to the outer surface for engagement with the lens mold, and at least one aperture extending through the body portion from the dist end to the proximal end.

EP 1 029 78 A2 discloses a probe for transferring a wet object, such as a contact lens, from a first position to a second position and having a passage for communication with a vacuum source and a nozzle at the end of the passage. The nozzle is of generally semi-spherical shape and has a plurality of perforations arranged thereon through which compressed air is supplied or a vacuum is achieved.

### SUMMARY OF THE INVENTION

The present invention provides a transfer tip, a system and a process for using the same as recited in the claims. The present invention achieves a reduction in applied forces and a decrease in cycle time.

### BRIEF DESCRIPTION OF THE DRAWINGS

FIGURE 1 illustrates a prior art transfer tip.
FIGURES 2A and 2B illustrate the top and edge views of a typical Front Curve lens mold; FIGURES 2C and 2D illustrate the top and edge views of a typical Back Curve lens mold.
FIGURE 3A and 3B respectively illustrate top (distal end) and side views of a transfer tip particularly suited to the transfer of the Back Curve of an injection molded ophthalmic lens mold.
FIGURE 4A and 4B respectively illustrate top (distal end) and side views of a transfer tip particularly suited to the transfer of the Front Curve of an injection molded ophthalmic lens mold.
FIGURE 5A and 5B respectively illustrate top (distal) and side views of a transfer tip embodiment of the present invention suited to either Front or Back Curves.

### DETAILED DESCRIPTION OF THE INVENTION

The invention pertains to the handling of injection molded ophthalmic lens molds. Ophthalmic lenses in this regard include without limitation those fabricated in such molds, for example, soft contact and intraocular lenses. The invention is especially utile in the context of soft contact lenses, also known as hydrogel lenses. These lenses are typically prepared from monomers including but not limited to: hydroxyethyl methacrylate (HEMA), vinyl pyrrolidone, glycerol methacrylate, methacrylic acid and acid esters.

While not constraining the present invention, soft lenses in this regard are typically prepared by free radical polymerization of monomer mix in lens molds fabricated as has been described hereinabove. The monomer mix may contain other additives as known in the art, e.g. crosslinking and strengthening agents. Polymerization is conventionally initiated by thermal means, or is photoinitiated using either UV or visible light. In these cases, the plastic lens molds in which polymerization occurs are effectively transparent to the photoinitiating light.

Plastics that commonly serve as materials of construction for injection molded lens molds in this regard are from the family of thermoplastics and can include without limitation: polyolefins, such as low-, medium-, and high-density polyethylene, polypropylene, and copolymers thereof; polystyrene; poly-4-methylpentene; polyacetal resins; polyacrylether; polyarylether; sulfones; Nylon 6; Nylon 66; Nylon 11; thermoplastic polyester and various fluorinated materials such as the fluorinated ethylene propylene copolymers and ethylene fluoroethylene copolymers. Polystyrene is preferred.

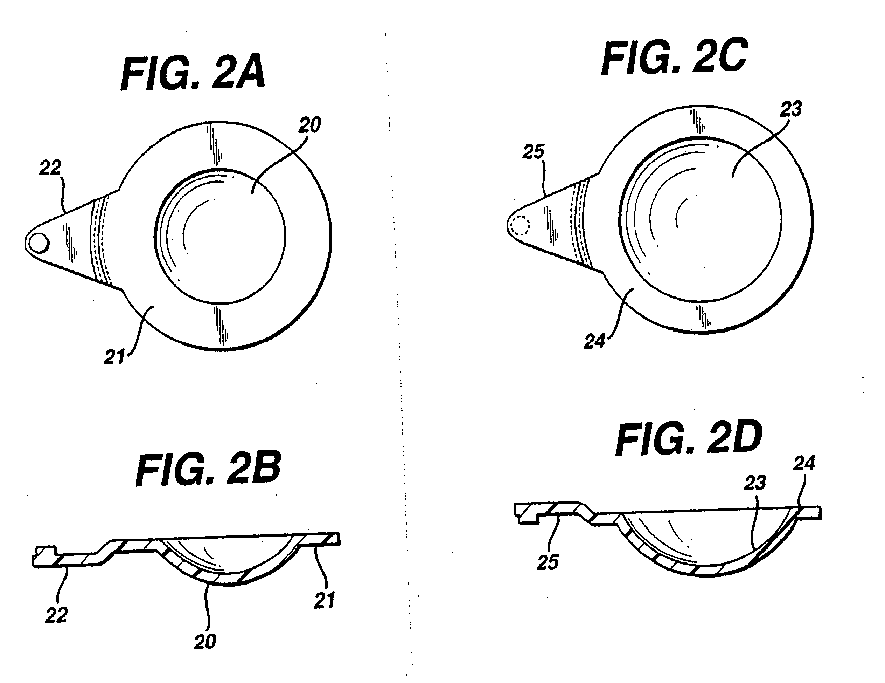

FIGURE 2 shows an embodiment of an injection molded ophthalmic lens mold to which the present invention has especial use, it being understood that other designs and styles of lens molds are contemplated as being within the scope of the inventive practice. FIGURES 2A and 2B depict a top and side view, respectively, of a Front Curve lens mold for a soft contact lens; similarly, FIGURES 2C and 2D depict top and side views of a Back Curve lens mold for soft contact lens. In preferred practices, the lens molds are fabricated with handling means thereon. These can be, without limitation, surfaces or other appendages that are apart from optically important central surface, such as for example a flange extending partly or entirely around the mold. In FIGURE 2, a preferred handling means is illustrated as annular flange 21 (Front Curve) and annular flange 24 (Back Curve). Tabs 22 and 25 may optionally be provided to further facilitate handling and positioning.

As indicate previously, and in further regard to FIGURE 2, in a preferred practice, the molding machine that produces the Back Curve is designed so that upon separation of the opposing mold elements, the concave surface 23 of the Back Curve lens mold is exposed. Conversely, the molding machine for the Front Curve separates such that the convex surface 20 of the Front Curve lens mold is exposed.

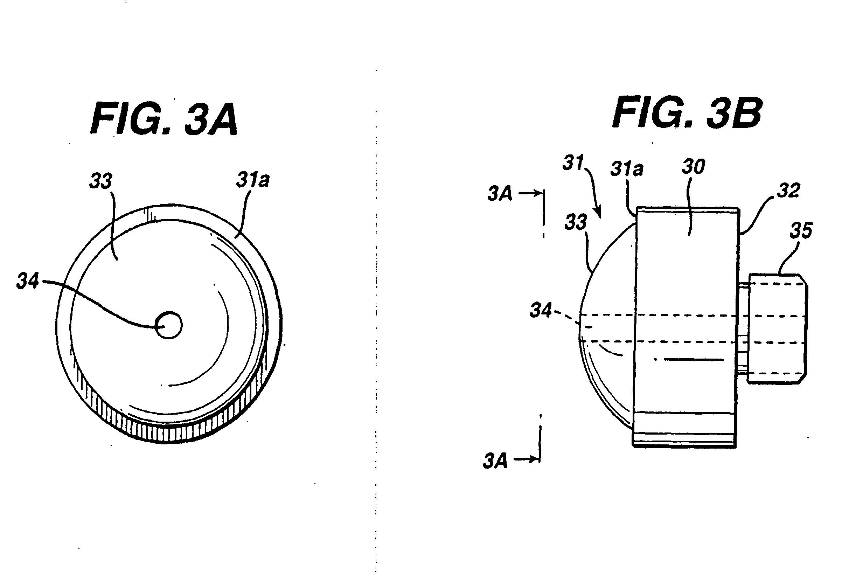

The transfer tip of the present invention will now be described with reference to FIGURES 3, 4 and 5. The practices so illustrated and described hereinafter are especially suitable for use with lens molds having shapes similar to those shown in FIGURE 2. It will be appreciated that the inventive transfer tip is hot limited to these preferred embodiments and that variations to same are within the scope and spirit of the invention.

FIGURES 3A and 3B show top and side views, respectively, of a transfer tip useful in handling lens molds having a concave shape, such as for example and without limitation, the Back Curve illustrated at FIGURES 2C and 2D where, for purposes of the present discussion, the concave shape is surface 23. The transfer tip is comprised of body portion 30 having a distal end (that is, the working end, or end in contact with the lens mold part that is being handled) generally at 31 and a proximal end, generally at 32, which proximal end serves the connection to the robotic assembly or other automated transfer device (not shown) and to the source of pressure differential such as vacuum means or positive (gas) pressure (not shown). The distal end, generally at 31, has an outer surface 33 which is complementary, in shape, to the concave shape of die lens mold part to be handled. For example, outer surface 33 is of a convex shape that is complementary to concave surface 23 of the Back Curve in FIGURE 2 so as to be as close to form-fitting to surface 23 (the area of non-optically relevant curvature of the lens mold) as practicable without impinging on same. The body portion further has a sealing means peripheral to the outer surface. In FIGURE 3, the sealing means is in the form of annular sealing ring 31a, which can be in the form of a flange or the like surface that is preferably integral with, but can be otherwise constituted as known in the art to body portion 30. Preferably, the sealing means on the transfer tip and the handling means on the lens mold are both in the same plane; preferably both are flat, sufficient to create and maintain a seal (by e.g. vacuum) effective to enable part pickup. For example, in the transfer has shown, annular sealing ring 31a is in the same plane as annular flange 24 on the Back Curve Figure 2.

Body portion 30, including outer surface 33, is substantially rigid. For example, it is of a constitution that will not deform, and will maintain its dimensions and geometry under the elevated temperatures present on and about the lens mold as removed from the molding machine, and under the pressures of the applied force created between the sealing means of the transfer tip and the handling means (e.g. flange) of the molded part. The substantially rigid nature of body portion 30 is preferably obtained through choice of materials of construction. Generally speaking, any material having a hardness sufficient to enable it to bet machined or otherwise shaped to have the requisite geometry and dimensional tolerances, e.g. flatness and the like, to achieve a workable seal, without deformation or distortion of the transfer tip when subjected to the applied sealing pressures with the lens mold, and which also has requisite thermal strength for the temperatures involved, can be used. This includes a variety of polymeric materials, metals, ceramics, cellulosic materials and the like. In a preferred practice, the material of construction has a Shore D Hardness of about 58 to about 90; more preferably about 75 to about 90; still more preferably about 85 to about 87. Serviceable polymeric materials include, without limitation, engineering grade plastics. Self-lubricating polymeric materials can be advantageously used to avoid sticking or adhering of the hot lens mold to the transfer tip. By way of exemplification only, and without constraining the scope of possible materials, preferred polymeric materials include polyacetyls (e.g. Delrin ®, which is most preferred, having a Shore D Hardness ofabout 86), polystyrenes, polypropylenes, polyethylenes, polyetheretherketones (PEEK), polyamides (e.g. Nylon ®), polyimides, polyamideimides (PAI), polyfluoroethylenes (e.g. Teflon ®), polyetherimides, polyesters, polycarbonates, polyethers, polyetherimides, polysulfide polymers, polysulfones, and blends and alloys of the foregoing. Polyacetyls, such as Delrin ®, are preferred. Useable metals include, again by way of example only, aluminum, stainless steel and like elemental metals and alloys that can be machined into the appropriate geometry, dimensional tolerances and sealing flatness.

In another preferred practice, the transfer tip is machined entirely from a unitary block of material, e.g. Delrin ®, using a lathe or other suitable means known in the art.

Also as shown in FIGURE 3, the transfer tip has at least one aperture 34 extending through said body portion 30 sufficient for flow communication with a source of differential pressure. The aperture can be one or more holes or bores of sufficient size drilled through the transfer tip. Preferably, a single aperture through the center of the transfer tip is employed. The source of differential pressure can include vacuum or positive (gas) pressure sources as known in the art. For example, vacuum is drawn through aperture at the center of the transfer tip to create differential pressure in the spatial volume between the transfer tip and the lens mold. As illustrated in FIGURE 3, the transfer tip preferably has at the proximal end 32 connection means for connection to said robotic assembly or other transfer device, such as for example a threaded portion 35 for conveniently removable connection to same. Other means of connection known in the art may also be employed.

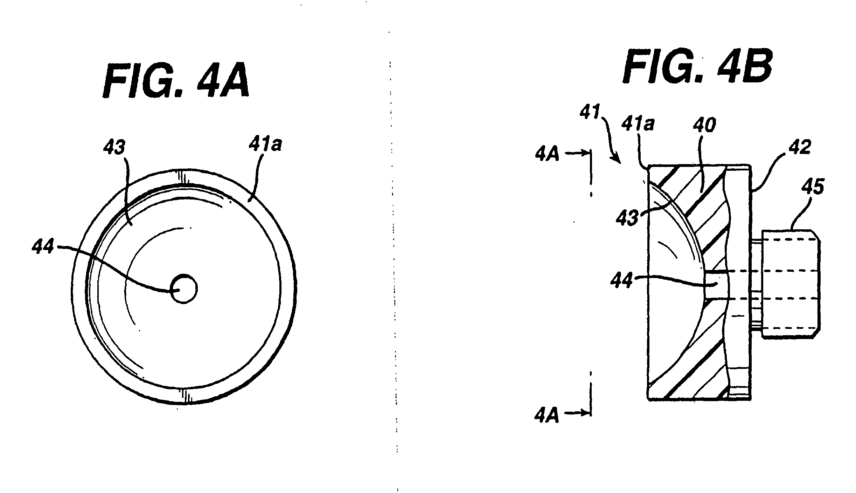

FIGURES 4A and 4B show top and side views, respectively, of a transfer tip useful in handling lens molds having a convex shape, such as for example and without limitation, the Front Curve illustrated at FIGURES 2A and 2B, where the convex shape is surface 20. The definitions and descriptions provided for FIGURE 3 aforesaid apply hereto unless otherwise indicated. FIGURE 4B shows a side view of said transfer tip having substantially rigid body portion 40 having a distal (working) end generally at 41 and a proximal (connection) end generally at 42 which end is ultimately connected to the robotic assembly or other transfer device and a source of pressure differential as hereinbefore described. The distal end, generally at 41, has an outer surface 43 whose shape is complementary to the shape of the lens mold; that is, outer surface 43 is concave whereas the shape of the lens mold, e.g. the Front Curve, is convex. Again, it is preferred if the concave outer surface 43 is as close to form-fitting the convex Front Curve surface 20 as practicable without impingement. Substantially rigid body portion 40 also has thereon a sealing means in the form of an annular sealing ring 41a, which in FIGURE 4 is in the form of the rim or edge 41a of the body portion 40, flat and in the same plane as e.g. flange 21 on Front Curve FIGURE 2A and 2B. Body portion 40 further has at least one aperture 44 extending therethrough from said proximal end 42 to said distal end 41 for flow communication with a source of differential pressure. As depicted, it is preferred if proximal end 42 further comprises connection means for attachment to said robotic assembly or other transfer device, such as for example threaded portion 45.

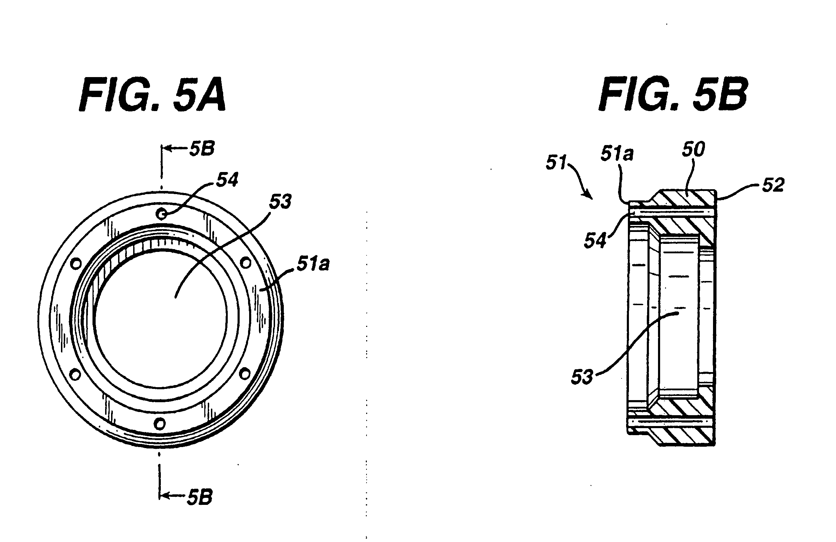

FIGURES 5A and 5B show top and side views respectively, of an embodiment of a transfer tip of the invention, this particular embodiment being useful for handing either Front or Back Curves. Again the definitions and descriptions provided for FIGURES 3 and 4 aforesaid apply hereto unless otherwise indicated. FIGURE 5B shows a side view of said transfer tip having a distal (working) end generally at 51 and a proximal end generally at 52 ultimately connected to the robotic assembly or other transfer device and source of pressure differential as hereinbefore described (connection means not shown in FIGURE 5). Substantially rigid body portion 50 has at distal end 51a sealing means in the form of an annular sealing surface 51a, which in the embodiment of FIGURE 5 is in the form of a rim or edge 51a of said body portion. Body portion 50 furthermore has a plurality of apertures 54 extending from the proximal d 52 to said annular sealing surface 51a. In a preferred practice, the plurality of apertures, e.g. holes through said rim 51a to said proximal end 52, are equally spaced around the circumference of the annular sealing surface. In the embodiment shown in FIGURE 5A, six holes, each about 60° apart, are provided. The equidistant nature and uniformity in size of the holes in the annular sealing surface 51a results in an equalization and uniformity of forces felt by the lens mold being handled. In practice, when the transfer tip of FIGURE 5 is employed to handle a lens mold having a convex shape (e.g. Front Curve), the convex surface of same (e.g. surface 20 of FIGURE 2) is situated in void 53, with annular sealing surface 51a engaged with flanged 21.

Alternatively, another embodiment of the invention that is not shown is to modify the embodiment shown in FIGURES 5A and 5B to add the convex and concave rigid shapes 33, and 43 shown in FIGURES 3A and 3B and FIGURES 4A and 4B while maintaining the plurality of apertures 54 as shown in FIGURES 5A and 5B. The apertures 34 and 44 as shown in FIGURES 3A and 3B and FIGURES 4A and 4B are optional.

In the most preferred embodiments, the transfer tips of FIGURE 5 are machined from a unitary block of polyacetyl, such as Delrin ®, having a Shore D Hardness of about 86. In practice, using the transfer tips of FIGURES 3 and 4, radial distortions of the lens molds being so handled of about 0.01 to 0.02mm were observed. Without being bound to any theory, it is believed said reductions were due partly because less evacuation time and less vacuum was required, and partly to the fact that the lens molds could be removed from the injection molding machines at a hotter temperature using the transfer tip of figures 3 and 4 as opposed to prior art tips.

## Claims

1. A transfer tip for handing an injection molded ophthalmic lens mold having a concave convex shape and having lens mold handling means thereon, said transfer tip comprising:
a substantially rigid body portion (50) having a distal end (51) comprising any annular sealing surface (51a) for engagement with said lens mold handling means and a proximal end (52) **characterized in that**
a plurality apertures (54) extend through said annular sealing surface (51a) from the distal end (51) to the proximal end (52) of said body portion (50).

2. The transfer tip of claim 1, wherein said distal end (51) of said substantially rigid body portion (50) has an outer surface (33, 43) that is complementary to the shape of the lens mold to be handled, and said annular sealing surface (51a) is peripheral to said outer surface (33, 43), said transfer tip further comprising:
at least one aperture (34, 44) extending through said outer surface (33, 43) from said distal end (51) to said proximal end (52).

3. The transfer tip of Claim wherein said substantially rigid body portion (50) is comprised of a material of construction having a Shore D Hardness of 58 to 90.

4. The transfer tip of Claim 3 wherein said substantially rigid body portion (50) is comprised of a material of construction having a Shore D Hardness of 75 to 90.

5. the transfer tip of any preceding Claim wherein said substantially rigid body portion (50) is comprised of a polymeric material.

6. The transfer tip of Claim 5 wherein said polymeric material is selected from the group consisting of polyacetyls, polystyrenes, polypropylenes, polyethylenes, polyetheretherketones, polyamides, polyimides, polyamideimides, polyfluoroethylenes, polyetherimides, polyesters, polycarbonates, polyethers, polyetherimides, polysulfide polymers, polysulfones, and blends and alloys of the foregoing.

7. The transfer tip of Claim 6 wherein said polymeric material is the polyacetyl Delrin ®.

8. The transfer tip of any one of Claims 1 to 3 wherein said substantially rigid body portion (50) is comprised of metal, ceramic or cellulosic material.

9. The transfer tip of Claim 2 wherein said outer surface (33) is convex.

10. The transfer tip of Claim 2 wherein said outer surface (43) is concave.

11. The transfer tip of any preceding Claim wherein said proximal end (52) has connection means (35).

12. A system for handling an injection molded ophthalmic lens mold half, said lens mold half having a concave or convex shape and having lens mold handling means in the form of a flange thereon, said system comprising:
a robotic assembly having a transport tip according to any preceding Claim thereon for picking up said lens mold at a first location and depositing said lens mold at a second location; and
a source of pressure differential in flow communication with said plurality of apertures (54).

13. A process for transporting an injection molded ophthalmic lens mold half from a first location to a second location, said lens mold half having a concave or convex shape and having lens mold handling means thereon, said process comprising:
providing a robotic assembly having a transfer tip thereon, said robotic assembly having means for transporting said lens mold half from said first location to said second location, said transfer tip having a substantially rigid body portion (50) having a distal end (51) and a proximal end (52), said distal end (51) comprising an annular sealing surface (51 a) for engagement with said lens mold handling means, and a plurality of apertures (54) extending through said annular sealing surface (51a) from the distal end (51) to the proximal end (52) of said body portion (50);
engaging said annular sealing surface (51a) with said lens mold handling means and providing a source of differential pressure in flow communication with said plurality of apertures (54) sufficient to securely hold said lens mold half to said transfer tip;
picking up said lens mold half from said first location;
transporting, by said robotic assembly, said lens mold half to a second location and depositing same thereat.

14. The process of claim 13, wherein said distal end (51) of said substantially rigid body portion (50) has an outer surface (33, 43) that is complementary to the shape of the lens mold half to be transported, and said annular sealing surface (51a) is peripheral to said outer surface (33, 43), said transfer tip further having at least one aperture (34, 44) extending through said outer surface (33, 43) from said distal end (51) to said proximal end (52), said process further comprising:
providing a source of differential pressure in flow communication with said at least one aperture (34, 44) through said outer surface (33, 43) sufficient to securely hold said lens mold half to said transfer tip.

## Patentansprüche

1. Überführungsspitze zum Übergeben einer spritzgegossenen Form für eine ophthalmische Linse, die eine konkave oder konvexe Gestalt hat mit eine Linsenform-Übergabeeinrichtung darauf hat, wobei die Überführungsspitze aufweist:
einen im wesentlichen starren Körperbereich (50) mit einem distalen Ende (51), welches eine ringförmige Dichtfläche (51a) zur Anlage an die Linsenform-Übergabeeinrichtung aufweist, und einem proximalen Ende (52);
**dadurch gekennzeichnet, daß** eine Vielzahl von Öffnungen (54) sich durch die ringförmige Dichtfläche (51a) von dem distalen Ende (51) zu dem proximalen Ende (52) des Körperbereiches (50) erstreckt.

2. Überfühnmgsspitze nach Anspruch 1, bei der das distale Ende (51) des im wesentlichen starren Körperbereiches (50) eine äußere Fläche (33, 43) hat, die komplementär zu der Gestalt der Linsenform ist, welche übergeben werden soll, und die ringförmige Dichtfläche (51a) peripher zu der äußeren Fläche (33, 43) liegt, wobei die Übsrführungsspitze weiter aufweist:
wenigstens eine Öffnung (34, 44), die sich durch die äußere Fläche (33, 43) von dem distalen Ende (51) zu dem proximalen Ende (52) erstreckt.

3. Übcrführungsspitze nach Anspruch 1, bei der der im wesentlichen starre Körperbereich (50) aus einem Konstruktionsmaterial mit einer Härte Shore D von 58 bis 90 besteht.

4. Überführungsspitze nach Anspruch 3, bei der der im wesentlichen starre Körperbereich (50) aus einem Konstruktionsmaterial mit einer Härte Shore D von 75 bis 90 besteht.

5. Überführungsspitze nach einem vorangehenden Anspruch, bei der der im wesentlichen starre Körperbereich (50) aus einem polymeren Material besteht.

6. Überführungsspitze nach Anspruch 5, bei der das polymere Material aus der Gruppe bestehend aus Polyacetylen, Polystyrolen, Polyproplylenen, Polyethylenen, Poyethezetherketonen, Polyamiden, Polyimiden, Polyamidimiden, Polyfluorethylenen, Polyetherimiden, Polyestern, Polycarbonaten, Polyethern, Polyetherimiden, Polysulfid-Polymeren, Polysulfonen und Mischungen und Legierungen der voranstehenden ausgewählt ist.

7. Überführungsspitze nach Anspruch 6, bei der das polymere Material das Polyacetyl Derin® ist.

8. Überfuhrungsspitze nach einem der Ansprüche 1 bis 3, bei der der im wesentliche starre Körperbereich (50) aus metallischem, keramischem oder zellulosischem Material besteht.

9. Überführungsspitze nach Anspruch 2, bei der die äußere Fläche (33) konvex ist.

10. Überfübirungsspitze nach Anspruch 3, bei der die äußere Fläche (43) konkav ist.

11. Überführungsspitze nach einem vorangehenden Anspruch, bei der das proximale Ende (52) eine Verbindungseinrichtung (35) hat.

12. System zum Übergeben einer spritzgegossenen Formhälfte für eine ophthalmische Linse, wobei die Linsenformhälfte eine konkave oder konvexe Form hat und eine Linsenfortn-Übergabeeinrichtung in der Form eines Flansches darauf hat, wobei das System aufweist:
eine Roboteranordnung mit einer Überführungsspitze nach einem vorangehenden Anspruch zum Aufnehmen der Linsenform an einem ersten Ort und zum Ablegen der Linsenform an einem zweiten Ort; und
eine Quelle für ein Druckdifferential in Strömungskommunikation mit der Vielzahl der Öffnungen (54).

13. Verfahren zum Transportieren einer spritzgegossenen Formhälfte für eine ophthalmische Linse von einem ersten Ort zu einem zweiten Ort, wobei die Linsenformhälfte eine konkave oder konvexe Form hat und eine Linsenform-Übergabeeinrichtung hat, wobei das Verfahren aufweist:
Bereitstellen einer Roboteranordnung mit einer Überführungsspitze darauf, wobei die Roboteranordnung eine Einrichtung zum Transportieren der Linsenformhälfte von dem ersten Ort zu dem zweiten Ort hat, wobei die Überführungsspitze einen im wesentlichen starren Körperbereich (50) mit einem distalen Ende (51) und einem proximalen Ende (52) hat, wobei das distale Ende (51) eine ringförmige Dichtfläche (51a) zur Anlage an die Linsenform-Übergabeeinrichtung, und eine Vielzahl von Öffnungen (54), die sich durch die ringförmige Dichtfläche (51a) von dem distalen Ende (51) zu dem proximalen Ende (52) des Körperbereichs (50) erstrecken, aufweist;
Anlegen der ringförmigen Dichtfläche (51a) an die Linsenform-Übergabeeinrichtung und Bereitstellen einer Quelle für Differentialdruck in Strömungskommunikation mit der Vielzahl der Öffnungen (54), der ausreichend ist, die Linsenformhälfle sicher an der Überführungsspitze zu halten;
Aufnehmen der Linsenformhälfte von dem ersten Ort;
Transportieren, mit der Roboteranordnung, der Linsenformhälfte zu einem zweiten Ort und Ablegen derselben dort.

14. Prozeß nach Anspruch 13, bei dem das distale Ende (51) des im wesentlichen starren Körperbereiches (50) eine Außenfläche (33, 43) hat, die komplementär zu der Form der Linsenformhälfte, die transportiert werden soll, ist, und eine ringförmige Dichtfläche (51a) peripher zu der äußeren Fläche (33, 43) liegt, wobei die Überführungsspitze weiter wenigstens eine Öffnung (34, 44) hat, die sich durch die äußere Fläche (33, 43) von dem distalen Ende (51) zu dem proximalen Ende (52) erstreckt, wobei das Verfahren weiter aufweist:
Bereitstellen einer Quelle für Differentialdruck in Strömungskommunikation mit der wenigstens einen Öffnung (34, 44) durch die äußere Fläche (33, 43), der ausreichend ist, die Linsenformhälfte sicher an der Überführungsspitze zu halten.

## Revendications

1. Embout de transfert destiné à manipuler un moule de lentille ophtalmique moulée par injection, présentant une forme concave ou convexe et comportant un moyen de manipulation de moule de lentille, ledit embout de transfert comprenant :
une partie de corps sensiblement rigide (50) comportant une extrémité distale (51) comprenant une surface d'étanchéité annulaire (51a) pour un engagement avec ledit moyen de manipulation de moule de lentille et une extrémité proximale (52), **caractérisé en ce que**
une pluralité d'ouvertures (54) s'étendent à travers ladite surface d'étanchéité annulaire (51a) depuis l'extrémité distale (51) jusqu'à l'extrémité proximale (52) de ladite partie de corps (50).

2. Embout de transfert selon la revendication 1, dans lequel ladite extrémité distale (51) de ladite partie de corps sensiblement rigide (50) présente une surface extérieure (33, 43) qui est complémentaire de la forme du moule de lentille à manipuler, et ladite surface d'étanchéité annulaire (51a) est périphérique à ladite surface extérieure (33, 43), ledit embout de transfert comprenant en outre :
au moins une ouverture (34, 44) s'étendant à travers ladite surface extérieure (33, 43) depuis ladite extrémité distale (51) jusqu'à l'extrémité proximale (52).

3. Embout de transfert selon la revendication 1, dans lequel ladite partie de corps sensiblement rigide (50) est composée d'un matériau de construction ayant une dureté Shore D comprise entre 58 et 90.

4. Embout de transfert selon la revendication 3, dans lequel ladite partie de corps sensiblement rigide (50) consiste en un matériau de construction ayant une dureté Shore D comprise entre 75 et 90.

5. Embout de transfert selon l'une quelconque des revendications précédentes, dans lequel ladite partie de corps sensiblement rigide (50) est composée d'un matériau polymère.

6. Embout de transfert selon la revendication 5, dans lequel ledit matériau polymère est sélectionné dans le groupe constitué de polyacétyles, de polystyrènes, de polypropylènes, de polyéthylènes, de polyétheréthercétones, de polyamides, de polyimides, de polyamideimides, de polyfluoroéthylènes, de polyétherimides, de polyesters, de polycarbonates, de polyéthers, de polyétherimides, de polymères de polysulfures, de polysulfones et de mélanges et alliages de ceux-ci.

7. Embout de transfert selon la revendication 6, dans lequel ledit matériau polymère est le polyacétyle Delrin^{®}.

8. Embout de transfert selon l'une quelconque des revendications 1 à 3, dans lequel ladite partie de corps sensiblement rigide (50) est composée de métal, de céramique ou de matériau cellulosique.

9. Embout de transfert selon la revendication 2, dans lequel ladite surface extérieure (33) est concave.

10. Embout de transfert selon la revendication 2, dans lequel ladite surface extérieure (43) est convexe.

11. Embout de transfert selon l'une quelconque des revendications précédentes, dans lequel ladite extrémité proximale (52) comporte un moyen de raccordement (35).

12. Système destiné à manipuler une moitié de moule de lentille ophtalmique moulée par injection, ladite moitié de moule de lentille ayant une forme concave ou convexe et comportant un moyen de manipulation de moule de lentille se présentant sous la forme d'une bride, ledit système comprenant:
un ensemble robotique comportant un embout de transport selon l'une quelconque des revendications précédentes, destiné à saisir ledit moule de lentille au niveau d'un premier emplacement et à déposer ledit moule de lentille au niveau d'un second emplacement ; et
une source de différentiel de pression en communication d'écoulement avec ladite pluralité d'ouvertures (54).

13. Processus de transport d'une moitié de moule de lentille ophtalmique moulée par injection, depuis un premier emplacement vers un second emplacement, ladite moitié de moule ayant une forme concave ou convexe et comportant un moyen de manipulation de moule de lentille, ledit processus comprenant :
le fait de prévoir un ensemble robotique comportant un embout de transfert, ledit ensemble robotique comportant un moyen destiné à transporter ladite moitié de moule de lentille, depuis ledit premier emplacement vers ledit second emplacement, ledit embout de transfert comportant une partie de corps sensiblement rigide (50) ayant une extrémité distale (51) et une extrémité proximale (52), ladite extrémité distale (51) comprenant une surface d'étanchéité annulaire (51a) pour un engagement avec ledit moyen de manipulation de moule de lentille, et une pluralité d'ouvertures (54) s'étendant à travers ladite surface d'étanchéité annulaire (51a) depuis l'extrémité distale (51) jusqu'à l'extrémité proximale (52) de ladite partie de corps (50) ;
l'engagement de ladite surface d'étanchéité annulaire (51a) avec ledit moyen de manipulation de moule de lentille et le fait de prévoir une source de pression différentielle en communication d'écoulement avec ladite pluralité d'ouvertures (54) suffisante pour maintenir de manière solide ladite moitié de moule de lentille sur ledit embout de transfert ;
la saisie de ladite moitié de moule de lentille depuis ledit premier emplacement ;
le transport, par ledit ensemble robotique, de ladite moitié de moule de lentille vers un second emplacement et le dépôt de celle-ci au niveau de ce dernier.

14. Processus selon la revendication 13, dans lequel ladite extrémité distale (51) de ladite partie de corps sensiblement rigide (50) a une surface extérieure (33, 43) qui est complémentaire de la forme de la moitié de moule de lentille à transporter, et ladite surface d'étanchéité annulaire (51a) est périphérique à ladite surface extérieure (33, 43), ledit embout de transfert comportant en outre au moins une ouverture (34, 44) s'étendant à travers ladite surface extérieure (33, 43) depuis ladite extrémité distale (51) jusqu'à ladite extrémité proximale (52), ledit processus comprenant en outre :
le fait de fournir une source de pression différentielle en communication d'écoulement avec ladite au moins une ouverture (34, 44) à travers ladite surface extérieure (33, 43) suffisante pour maintenir de façon solide ladite moitié de moule de lentille sur ledit embout de transfert.
